# EUROPEAN PATENT APPLICATION

(11) **EP 3 131 361 A1**
(43) Date of publication of application: **15.02.2017**
(21) Application number: 14890898.1
(22) Date of filing: 30.04.2014
(51) Int. Cl.: H04W 76/02

(54) **MOBILITY MANAGEMENT ENTITY AND METHOD FOR PROCESSING DOWNLINK CIRCUIT SWITCHED CS SERVICE**

(71) Applicant: Huawei Technologies Co. Ltd., Shenzhen, Guangdong 518129 (CN)
(72) Inventor: SHU, Lin, Shenzhen Guangdong 518129 (CN); LI, Zhangyuan, Shenzhen Guangdong 518129 (CN)
(74) Representative: Gill Jennings & Every LLP
(86) International application number: PCT/CN2014/076605
(87) International publication number: WO 2015/165079

(57) **Abstract**

Embodiments of the present invention disclose a method for processing a downlink circuit switched CS service and a mobility management entity. The method includes: receiving, by an MME, a notification message sent by an MSC/VLR after the MSC/VLR is restarted, where the notification message is used to indicate a downlink CS service to the MME for user equipment UE; when the UE is in an idle state, suspending, by the MME, a CS fallback procedure triggered by the downlink CS service; requesting, by the MME, the UE to enter a connected state; requesting, by the MME, the UE to initiate a combined location update procedure, so that the UE completes registration in a CS domain; and instructing, by the MME after the UE completes the registration in the CS domain, the UE to perform the CS fallback procedure triggered by the downlink CS service. According to the method for processing a downlink circuit switched CS service and the mobility management entity of the embodiments of the present invention, the UE is enabled to preferentially complete the registration in the CS domain, and then the UE is instructed to perform the CS fallback procedure triggered by the downlink CS service, so that procedure collision processing of the UE and a network side can be avoided.

## Description

### TECHNICAL FIELD

The present invention relates to the communications field, and in particular, to a method for processing a downlink circuit switched CS service and a mobility management entity.

### BACKGROUND

An evolved packet system (Evolved Packet System, EPS for short) is put forward by the 3rd Generation Partnership Project (3rd Generation Partnership Project, 3GPP for short) based on the second generation (The Second Generation, 2G for short) mobile communications network GSM/EDGE (Global System of Mobile Communication/Enhanced Data Rate for GSM Evolution, Global System for Mobile Communications/Enhanced Data rates for GSM Evolution) and the third generation (The Third Generation, 3G for short) mobile communications network UMTS (Universal Mobile Telecommunications System, Universal Mobile Telecommunications System). An EPS network includes an evolved universal mobile telecommunication system territorial radio access network (Evolved Universal Mobile Telecommunication System Territorial Radio Access Network, E-UTRAN for short) and an evolved packet core network (Evolved Packet Core Network, EPC for short).

Based on an SGs interface function between a mobile switching center/visitor location register (Mobile Switching Center/Visitors Location Register, MSC/VLR for short) and a mobility management entity (Mobility Management Entity, MME for short) in the 2G/3G network, the 3GPP puts forward a " circuit switched fallback" (CS Fallback, CSFB for short) technology. The CSFB technology enables user equipment (User Equipment, UE for short) under coverage of an E-UTRAN to return, by using the E-UTRAN, to a CS domain of the 2G/3G network to complete service processing when a circuit switched (Circuit Switched, CS for short) voice service needs to be processed. In a CSFB mechanism, UE camping on an E-UTRAN and supporting CSFB needs to initiate a combined registration procedure to implement simultaneous registration in a packet switched (Packet Switched, PS for short) domain of an EPC network and a CS domain of a 2G/3G network. An uplink/downlink CSFB service can be normally initiated only after combined registration is successfully implemented.

If the MSC/VLR with which the UE is registered is reset or restarted, when receiving a downlink (Mobile Terminating, MT) CS voice service request of the UE, the MSC/VLR sends an SGs paging request message to each MME that has an SGs interface between each MME and the MSC/VLR. If the UE is currently in an idle state, a registered MME initiates air interface paging to the UE and sets a core network (Core Network, CN for short) domain of the paging to "CS". After receiving the paging whose CN domain is "CS", the UE sends an extended service request (Extended Service Request) message as a paging response, and enters a connected state.

After receiving the paging response of the UE, the MME needs to perform two procedures: (1) sending a message carrying a CSFB indication to an evolved NodeB (evolved Node B, eNodeB), so as to continue a current downlink CSFB procedure; and (2) requesting the UE to initiate a CS service re-registration procedure, that is, sending a detach request message whose detach type is "international mobile subscriber identity (International Mobile Subscriber Identity, IMSI for short) detach" to the UE.

For the procedure (2), after receiving the detach request message, the UE initiates a combined location update procedure whose update type is "combined Tracking Area (Tracking Area, TA)/Location Area (Location Area, LA) update with IMSI attach". When the MME receives a combined location update request message sent by the UE, the MME needs to perform procedure collision processing. That is, before an extended service request procedure is completed, a combined location update request is received. For a UE side, the UE also needs to perform the procedure collision processing. That is, before the current extended service request procedure is completed, the detach request message sent by the MME is received. However, currently, there is no effective mechanism to cope with such procedure collision.

### SUMMARY

Embodiments of the present invention provide a method and an apparatus for processing a downlink circuit switched CS service. When a downlink CS service is initiated to UE in an idle state after an MSC/VLR is reset or restarted, registration of the UE in a CS domain may be preferentially implemented, so that procedure collision processing of the UE and a network side can be avoided.

According to a first aspect, a method for processing a downlink circuit switched CS service is provided, where the method includes: receiving, by a mobility management entity MME, a notification message sent by a mobile switching center/visitor location register MSC/VLR after the MSC/VLR is restarted, where the notification message is used to indicate a downlink circuit switched CS service to the MME for user equipment UE; when the UE is in an idle state, suspending, by the MME, a CS fallback procedure triggered by the downlink CS service; requesting, by the MME, the UE to enter a connected state; requesting, by the MME, the UE to initiate a combined location update procedure, so that the UE completes registration in a CS domain; and instructing, by the MME after the UE completes the registration in the CS domain, the UE to perform the CS fallback procedure triggered by the downlink CS service.

With reference to the first aspect, in a first possible implementation manner, the notification message is a first paging request message; and the method further includes: buffering, by the MME, the first paging request message, where the suspending a CS fallback procedure triggered by the downlink CS service includes: suspending a CS fallback procedure triggered by the first paging request message.

With reference to the first possible implementation manner, in a second possible implementation manner, the requesting, by the MME, the UE to enter a connected state includes: sending, by the MME, an air interface paging message to the UE, where a core network CN domain included in the air interface paging message is the CS domain; and the method further includes: receiving, by the MME, an extended service request message that is sent by the UE according to the air interface paging message.

With reference to the second possible implementation manner, in a third possible implementation manner, after the receiving, by the MME, an extended service request message that is sent by the UE, the method further includes: starting, by the MME, a first timer, where the instructing, by the MME after the UE completes the registration in the CS domain, the UE to perform the CS fallback procedure triggered by the downlink CS service includes: after the UE completes the registration in the CS domain, before the first timer expires, and when the MME receives a second paging request message sent by the MSC/VLR, instructing, by the MME, the UE to perform a CS fallback procedure triggered by the second paging request message, where the second paging request message is used to indicate the downlink CS service to the MME for the UE, and the second paging request message includes an international mobile subscriber identity IMSI and a location area identity LAI of the UE; or after the UE completes the registration in the CS domain, and when the first timer expires, instructing, by the MME, the UE to perform the suspended CS fallback procedure triggered by the first paging request message.

With reference to the second possible implementation manner, in a fourth possible implementation manner, after the receiving, by the MME, an extended service request message that is sent by the UE, the method further includes: sending, by the MME, an initial context setup request message to an evolved NodeB eNodeB, where the initial context setup request message does not include circuit switched fallback CSFB indication information.

With reference to the first possible implementation manner, in a fifth possible implementation manner, the requesting, by the MME, the UE to enter a connected state includes: sending, by the MME, an air interface paging message to the UE, where a CN domain included in the air interface paging message is a packet switched PS domain; and the method further includes: receiving, by the MME, a service request message that is sent by the UE according to the air interface paging message.

With reference to the fourth or the fifth possible implementation manner, in a sixth possible implementation manner, after the UE completes re-registration in the CS domain, the method further includes: starting, by the MME, a second timer, where the instructing, by the MME after the UE completes the registration in the CS domain, the UE to perform the CS fallback procedure triggered by the downlink CS service includes: after the UE completes the registration in the CS domain, before the second timer expires, and when the MME receives a second paging request message sent by the MSC/VLR, instructing, by the MME, the UE to perform a CS fallback procedure triggered by the second paging request message, where the second paging request message is used to indicate the downlink CS service to the MME for the UE, and the second paging request message includes an IMSI and an LAI of the UE; or after the UE completes the registration in the CS domain, and when the second timer expires, instructing, by the MME, the UE to perform the suspended CS fallback procedure triggered by the first paging request message.

With reference to the first aspect or any one of the first to the sixth possible implementation manners, in a seventh possible implementation manner, the requesting, by the MME, the UE to initiate a combined location update procedure includes: sending, by the MME, a detach request message to the UE, where the detach request message is used to request the UE to initiate the combined location update procedure, and a detach type included in the detach request message is IMSI detach.

With reference to the first aspect or any one of the first to the seventh possible implementation manners, in an eighth possible implementation manner, the instructing, by the MME, the UE to perform the CS fallback procedure triggered by the downlink CS service includes: sending, by the MME, a CS service notification message to the UE, so that the UE performs the CS fallback procedure triggered by the downlink CS service.

According to a second aspect, a mobility management entity MME is provided, including: a receiving module, configured to receive a notification message sent by a mobile switching center/visitor location register MSC/VLR after the MSC/VLR is restarted, where the notification message is used to indicate a downlink circuit switched CS service to the MME for user equipment UE; a processing module, configured to: when the UE is in an idle state, suspend a CS fallback procedure triggered by the downlink CS service; a requesting module, configured to: request the UE to enter a connected state, and request the UE to initiate a combined location update procedure, so that the UE completes registration in a CS domain; and a notification module, configured to instruct, after the UE completes the registration in the CS domain, the UE to perform the CS fallback procedure triggered by the downlink CS service.

With reference to the second aspect, in a first possible implementation manner of the second aspect, the notification message received by the receiving module is a first paging request message; and the MME further includes: a buffering module, configured to buffer the first paging request message, where the processing module is configured to suspend a CS fallback procedure triggered by the first paging request message.

With reference to the first possible implementation manner of the second aspect, in a second possible implementation manner of the second aspect, the requesting module is configured to send an air interface paging message to the UE, where a core network CN domain included in the air interface paging message is the CS domain; and the receiving module is further configured to receive an extended service request message that is sent by the UE according to the air interface paging message.

With reference to the second possible implementation manner of the second aspect, in a third possible implementation manner of the second aspect, the MME further includes: a first timing module, configured to: after the receiving module receives the extended service request message sent by the UE, start a first timer, where the notification module is configured to: after the UE completes the registration in the CS domain, before the first timer expires, and when the receiving module receives a second paging request message sent by the MSC/VLR, instruct the UE to perform a CS fallback procedure triggered by the second paging request message, where the second paging request message is used to indicate the downlink CS service to the MME for the UE, and the second paging request message includes an international mobile subscriber identity IMSI and a location area identity LAI of the UE; or the notification module is configured to: after the UE completes the registration in the CS domain, and when the first timer expires, instruct the UE to perform the CS fallback procedure that is suspended by the processing module and that is triggered by the first paging request message.

With reference to the second possible implementation manner of the second aspect, in a fourth possible implementation manner of the second aspect, the requesting module is further configured to: after the receiving module receives the extended service request message sent by the UE, send an initial context setup request message to an evolved NodeB eNodeB, where the initial context setup request message does not include circuit switched fallback CSFB indication information.

With reference to the first possible implementation manner of the second aspect, in a fifth possible implementation manner of the second aspect, the requesting module is configured to send an air interface paging message to the UE, where the CN domain included in the air interface paging message is a packet switched PS domain; and the receiving module is further configured to receive a service request message that is sent by the UE according to the air interface paging message.

With reference to the fourth or the fifth possible implementation manner of the second aspect, in a sixth possible implementation manner of the second aspect, the MME further includes: a second timing module, configured to: after the UE completes the registration in the CS domain, start a second timer, where the notification module is configured to: after the UE completes the registration in the CS domain, before the second timer expires, and when the receiving module receives a second paging request message sent by the MSC/VLR, instruct the UE to perform a CS fallback procedure triggered by the second paging request message, where the second paging request message is used to indicate the downlink CS service to the MME for the UE, and the second paging request message includes an IMSI and an LAI of the UE; or the notification module is configured to: after the UE completes the registration in the CS domain, and when the second timer expires, instruct the UE to perform the CS fallback procedure that is suspended by the processing module and that is triggered by the first paging request message.

With reference to the second aspect or any one of the first to the sixth possible implementation manners of the second aspect, in a seventh possible implementation manner of the second aspect, the requesting module is configured to send a detach request message to the UE, where the detach request message is used to request the UE to initiate the combined location update procedure, and a detach type included in the detach request message is IMSI detach.

With reference to the second aspect or any one of the first to the seventh possible implementation manners of the second aspects, in an eighth possible implementation manner of the second aspect, the notification module is configured to send a CS service notification message to the UE, so that the UE performs the CS fallback procedure triggered by the downlink CS service.

Based on the foregoing technical solutions, after an MME receives a notification message that is sent after an MSC/VLR is restarted and that is for a downlink CS service of UE, and when the UE is in an idle state, by suspending a CS fallback procedure triggered by the downlink CS service, the MME enables the UE to preferentially complete registration in a CS domain, and then instructs the UE to perform the CS fallback procedure triggered by the downlink CS service, so that procedure collision processing of the UE and a network side can be avoided.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for processing a downlink circuit switched CS service according to an embodiment of the present invention;
FIG. 2 is a schematic flowchart of a method for processing a downlink circuit switched CS service according to another embodiment of the present invention;
FIG. 3 is a schematic flowchart of a method for processing a downlink circuit switched CS service according to another embodiment of the present invention;
FIG. 4 is a schematic flowchart of a method for processing a downlink circuit switched CS service according to another embodiment of the present invention;
FIG. 5 is a schematic block diagram of a mobility management entity according to an embodiment of the present invention; and
FIG. 6 is a schematic block diagram of a mobility management entity according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

In the embodiments of the present invention, user equipment UE (User Equipment) may be any one of the following, and the user equipment may be static or mobile. User equipment may include, but is not limited to, a station (Station), a mobile station (Mobile Station), a subscriber unit (Subscriber Unit), a personal computer (Personal Computer), a laptop computer (Laptop Computer), a tablet computer (Tablet Computer), a netbook (Netbook), a terminal (Terminal), a cellular phone (Cellular Phone), a handheld device (Handheld), a cordless telephone set (Cordless Phone), a personal digital assistant (Personal Digital Assistant, PDA for short), a data card (Data Card), a USB plug-in device, a mobile WiFi hotspot device (MiFi Devices), a smart watch, smart glasses, a wireless modem (Modem), a wireless router, and a wireless local loop (Wireless Local Loop, WLL for short) station. The foregoing user equipment may be distributed in an entire wireless network. A mobile switching center MSC and a visitor location register VLR are usually collocated as a same network element, referred to as MSC/VLR, or VLR for short.

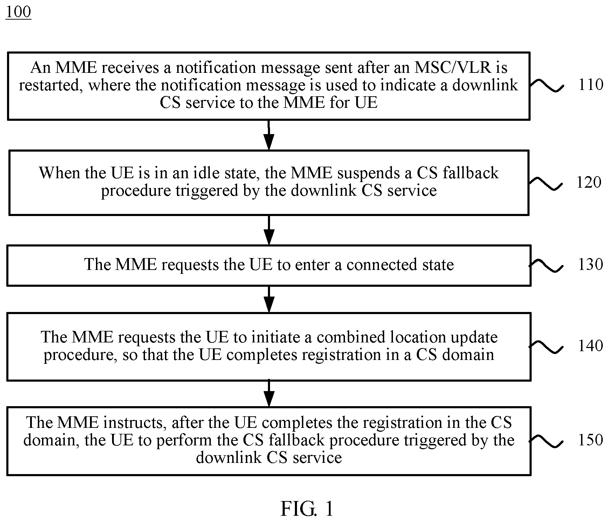

FIG. 1 is a schematic flowchart of a method 100 for processing a downlink circuit switched CS service according to an embodiment of the present invention. The method 100 is performed by a mobility management entity MME. As shown in FIG. 1, the method 100 includes the following content.

110: An MME receives a notification message sent by a mobile switching center/visitor location register MSC/VLR after the MSC/VLR is restarted, where the notification message is used to indicate a downlink (Mobile Terminating, MT for short) circuit switched CS service to the MME for user equipment UE;

It should be understood that before 110, the UE already initiates a combined attach procedure and a combined location update procedure, and successfully performs combined registration in a PS domain of an EPC network and a CS domain of a 2G/3G network. Subsequently, the MSC/VLR with which the UE is registered is reset or restarted, and if the MSC/VLR receives, after being reset or restarted, a downlink CS service request of the UE, the MSC/VLR sends a notification message to each MME that has an SGs interface between each MME and the MSC/VLR. It should be understood that after the MSC/VLR is restarted, the MSC/VLR sends a reset indication message to each MME that has an SGs interface connection to the MSC/VLR. After receiving the reset indication message, the MME marks that the MSC/VLR is unreliable. In other words, the MME can know that the MSC/VLR is reset or restarted.

120: When the UE is in an idle state, the MME suspends a CS fallback procedure triggered by the downlink CS service.

130: The MME requests the UE to enter a connected state.

140: The MME requests the UE to initiate a combined location update procedure, so that the UE completes registration in a CS domain.

In other words, when in the idle state, the UE first needs to enter the connected state from the idle state, and then the UE is requested to initiate the combined location update procedure.

150: The MME instructs, after the UE completes the registration in the CS domain, the UE to perform the CS fallback procedure triggered by the downlink CS service.

When the MME receives a combined location update request message sent by the UE, the MME needs to perform procedure collision processing. That is, before an extended service request procedure is completed, a combined location update request is received. For a UE side, the UE also needs to perform the procedure collision processing. That is, before the current extended service request procedure is completed, a detach request message sent by the MME is received.

In this case, if the MME preferentially requests an eNodeB to perform the CSFB fallback procedure, the UE may fall back to the 2G/3G network before the MME initiates a detach procedure. Consequently, the UE cannot receive a subsequent detach request message sent by the MME. If the MME preferentially initiates the detach procedure, that is, does not send a message carrying a CSFB indication to the eNodeB, no corresponding air interface bearer is established in the extended service request procedure. Subsequently, after CS service re-registration is completed, in a downlink CSFB procedure re-initiated by the MSC/VLR, the MME still needs the eNodeB to establish an air interface bearer, but cannot directly perform the downlink CSFB procedure of the connected state. If the MME performs the extended service request procedure and the detach procedure in parallel, a case in which the UE falls back to the 2G/3G network before the combined location update procedure is completed may occur. Consequently, the current combined location update procedure and the subsequent downlink CSFB procedure that is re-initiated by the MSC/VLR are abnormal or even fail, and unnecessary signaling overheads are caused. If the MME performs the extended service request procedure and the detach procedure in parallel, procedure collision simultaneously occurs on a UE side and an MME side, causing implementation complexity of the UE side and the MME side.

Therefore, in the method for processing a downlink CS service of this embodiment of the present invention, after an MME receives a notification message that is sent after an MSC/VLR is restarted and that is for a downlink CS service of UE, and when the UE is in an idle state, by suspending a CS fallback procedure triggered by the downlink CS service, the MME enables the UE to preferentially complete registration in a CS domain, and then instructs the UE to perform the CS fallback procedure triggered by the downlink CS service, so that procedure collision processing of the UE and a network side can be avoided.

Specifically, in another embodiment, the notification message in 110 is a first paging request message; and the method 100 further includes: buffering, by the MME, the first paging request message, where the suspending a CS fallback procedure triggered by the downlink CS service includes: suspending a CS fallback procedure triggered by the first paging request message.

It should be understood that the first paging request message is used to indicate the downlink circuit switched CS service to the MME for the UE, and the first paging request message includes indication information of the downlink CS service. Because the MSC/VLR is reset or restarted, the first paging request message includes an international mobile subscriber identity (International Mobile Subscriber Identity, IMSI for short) of the UE, but does not include a location area identity (Location Area Identifier, LAI for short) of the UE. When the MME receives the first paging request message sent by the MSC/VLR, and when the UE is in the idle state, the MME first needs to request the UE to enter the connected state, and further needs to request the UE to initiate the combined location update procedure, so as to complete registration in the CS domain. To avoid procedure collision, the MME suspends the CS fallback procedure triggered by the first paging request message, and buffers the first paging request message, so that after preferentially completing the registration in the CS domain, the UE performs the CS fallback procedure triggered by the first paging request message.

Specifically, in another embodiment, 130 includes: sending, by the MME, an air interface paging message to the UE, where a core network CN domain included in the air interface paging message is the CS domain; and the method 100 further includes: receiving, by the MME, an extended service request (Extended Service Request) message that is sent by the UE according to the air interface paging message, where
the extended service request message may be used by the UE to initiate the CS fallback procedure, and herein, the extended service request message is used as a response message for the air interface paging message.

Correspondingly, after the receiving, by the MME, an extended service request message that is sent by the UE, the method 100 further includes: starting, by the MME, a first timer. Specifically, 150 includes: 150a: After the UE completes the registration in the CS domain, before the first timer expires, and when the MME receives a second paging request message sent by the MSC/VLR, the MME instructs the UE to perform a CS fallback procedure triggered by the second paging request message, where the second paging request message is used to indicate the downlink CS service to the MME for the UE, and the second paging request message includes the IMSI and the LAI of the UE; or 150b: After the UE completes the registration in the CS domain, and when the first timer expires, the MME instructs the UE to perform the suspended CS fallback procedure triggered by the first paging request message.

The second paging request message includes indication information of the downlink CS service, and the second paging request message is sent by the MSC/VLR after the UE completes the registration in the CS domain.

Specifically, after the UE completes the registration in the CS domain, and before the first timer expires, if the MME receives the second paging request message sent by the MSC/VLR, the MME may instruct the UE to perform the CS fallback procedure triggered by the second paging request message. In addition, the MME may further stop the first timer, delete the buffered first paging request message, and terminate the suspended CS fallback procedure triggered by the first paging request message.

After the UE completes the registration in the CS domain, and when the first timer expires, if the MME does not receive the second paging request message sent by the MSC/VLR, the MME may instruct the UE to perform the CS fallback procedure triggered by the previously-buffered first paging request message. Subsequently, the MME may delete the buffered first paging request message.

It should be understood that in another embodiment, after the MME receives the extended service request message that is sent by the UE according to the air interface paging message, in the method 100, the MME may not start the first timer, and the MME may immediately instruct the UE to perform the suspended CS fallback procedure triggered by the first paging request message after the UE completes the registration in the CS domain, and delete the buffered first paging request message.

In another embodiment, after 130, the method 100 further includes: sending, by the MME, an initial context setup (Initial Context Setup) request message to an evolved NodeB (evolved NodeB, eNodeB for short), where the initial context setup request message does not include CSFB indication information.

The initial context setup request message sent by the MME to the eNodeB does not include the CSFB indication information, and therefore the eNodeB does not continue the CSFB procedure, thereby ensuring that the UE preferentially completes re-registration to the CS domain. It should be noted that the re-registration is so called relative to the combined registration that is already successfully performed by the UE in the PS domain of the EPC network and the CS domain of the 2G/3G network before 110, and is equivalent to another time of implementation of registration in the CS domain.

Alternatively, in another embodiment, 130 includes: sending, by the MME, an air interface paging message to the UE, where the CN domain included in the air interface paging message is the packet switched (Packet Switched, PS for short) domain; and the method 100 further includes: receiving, by the MME, a service request (Service Request) message that is sent by the UE according to the air interface paging message.

Because the CN domain in the air interface paging message is the PS domain, the UE may initiate a normal service request instead of the extended service request message. The service request message may be used as a response message for the air interface paging message.

Correspondingly, after the UE completes the re-registration in the CS domain, the method 100 further includes: starting, by the MME, a second timer. Correspondingly, 150 includes: 150c: After the UE completes the registration in the CS domain, before the second timer expires, and when the MME receives the second paging request message sent by the MSC/VLR, the MME instructs the UE to perform the CS fallback procedure triggered by the second paging request message, where the second paging request message is used to indicate the downlink CS service to the MME for the UE, and the second paging request message includes the IMSI and the LAI of the UE; or 150d: After the UE completes the registration in the CS domain, and when the second timer expires, the MME instructs the UE to perform the suspended CS fallback procedure triggered by the first paging request message.

The second paging request message includes the indication information of the downlink CS service, and the second paging request message is sent by the MSC/VLR after the UE completes the registration in the CS domain.

Specifically, before the second timer expires, if the MME receives the second paging request message sent by the MSC/VLR, the MME may instruct the UE to perform the CS fallback procedure triggered by the second paging request message. In addition, the MME may stop the second timer, and delete the buffered first paging request message.

When the second timer expires, if the MME does not receive the second paging request message sent by the MSC/VLR, the MME may instruct the UE to perform the CS fallback procedure triggered by the buffered first paging request message. In addition, the MME may delete the first paging request message from a buffer.

It should be understood that in another embodiment, in the method 100, the MME may not start the second timer. The MME may immediately instruct the UE to perform the suspended CS fallback procedure triggered by the first paging request message after the UE completes the registration in the CS domain, and delete the buffered first paging request message.

Specifically, in another embodiment, in 140, the MME sends a detach request message to the UE, where the detach request message is used to request the UE to initiate the combined location update procedure, and the detach type included in the detach request message is IMSI detach.

Specifically, in another embodiment, in 150, the MME sends a CS service notification (CS Service Notification) message to the UE, so that the UE performs the CS fallback procedure triggered by the downlink CS service.

Therefore, in the method for processing a downlink circuit switched CS service of this embodiment of the present invention, after an MME receives a notification message that is sent after an MSC/VLR is restarted and that is for a downlink CS service of UE, and when the UE is in an idle state, by suspending a CS fallback procedure triggered by the downlink CS service, the MME enables the UE to preferentially complete registration in a CS domain, and then instructs the UE to perform the CS fallback procedure triggered by the downlink CS service, so that procedure collision processing of the UE and a network side can be avoided.

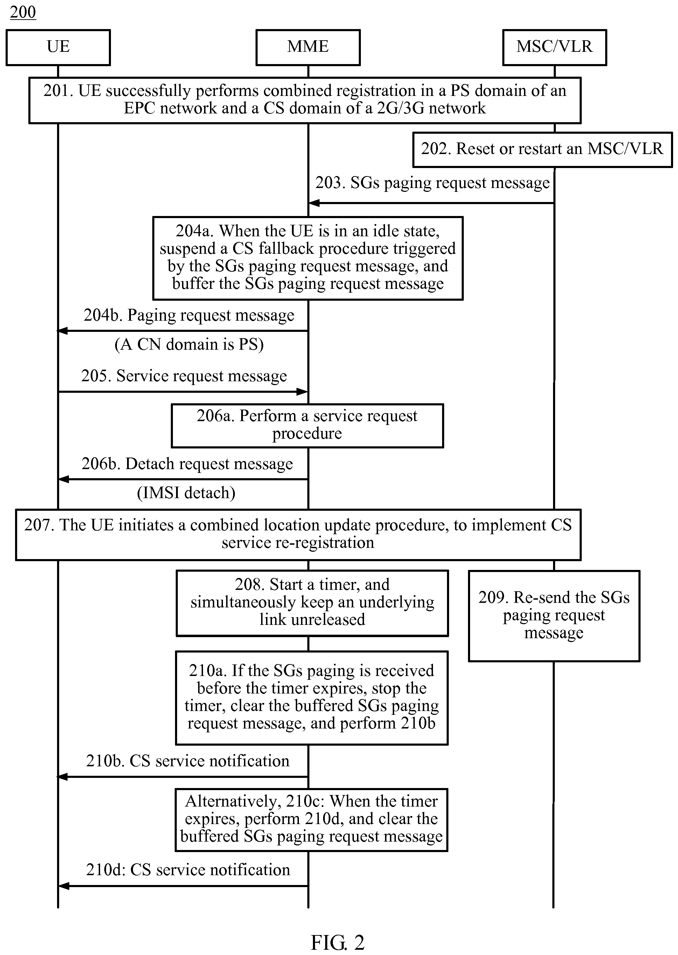

The following describes the method for processing a downlink CS service according to this embodiment of the present invention in detail with reference to FIG. 2 to FIG. 4.

FIG. 2 is a schematic flowchart of a method 200 for processing a downlink circuit switched CS service according to an embodiment of the present invention. The method 200 is an example of the method 100. As shown in FIG. 2, the method 200 for processing a downlink CS service includes the following content.

201: UE initiates a combined attach procedure or a combined location update procedure, and successfully performs combined registration in a PS domain of an EPC network and a CS domain of a 2G/3G network.

202: Reset or restart an MSC/VLR with which the UE is registered.

203: If the MSC/VLR receives, after being reset or restarted, a downlink CS service request of the UE, the MSC/VLR sends an SGs paging request message to each MME that has an SGs interface between each MME and the MSC/VLR, and starts a paging timer for each MME, where the SGs paging message includes an identity IMSI of the UE, but does not include a location information identity LAI of the UE. It should be noted that after the MSC/VLR is restarted, the MSC/VLR sends a reset indication message to each MME that has an SGs interface connection to the MSC/VLR. After receiving the reset indication message, the MME marks that the MSC/VLR is unreliable.

204a: After the MME with which the UE is registered receives the SGs paging request message not including the LAI, when the UE is in an idle state, the MME suspends a CS fallback procedure triggered by the SGs paging request message, and buffers the SGs paging request message.

204b: The MME initiates air interface paging to the UE, that is, sends a paging request message to the UE, and the MME sets a CN domain of the paging message to "PS".

205: The UE initiates a normal service request (Service Request) procedure to the MME as a paging response.

206a: The MME performs the normal service request procedure, so that the UE changes from the idle state into a connected state.

206b: After the UE enters the connected state, the MME sends a detach request message to the UE, and initiates a detach procedure whose detach type is "IMSI detach", so as to trigger the UE to initiate a CS service restoration procedure.

It should be understood that the MME may simultaneously perform 206a and 206b, or may first perform 206a and then perform 206b, or may first perform 206b and then perform 206a. It should be noted that the UE is enabled to change from the idle state into the connected state by performing an initiation process in step 206a, and it indicates that an underlying link is already established between the UE and the MME.

207: The UE initiates the combined location update procedure, that is, sends a combined location update request message whose update type is "combined TA/LA update with IMSI attach" to the MME.

The MME performs and completes the combined location update procedure according to the prior art, so as to implement re-registration of the UE in the CS domain. It should be understood that in this embodiment of the present invention, the combined location update procedure may be specifically a combined tracking area update (Tracking Area Update, TAU for short) procedure. It should be further understood that in this embodiment of the present invention, after receiving an IMSI detach request message, the UE may reply to the MME with a detach accept message. After receiving the detach accept message, the MME keeps the underlying link unreleased, that is, keeps the UE in the connected state, to ensure that the combined location update procedure is successfully performed.

208: The MME starts a timer, and simultaneously keeps the underlying link unreleased, that is, keeps the UE and the MME in the connected state.

209: After the MSC/VLR completes the registration of the UE to the CS domain, that is, completes an SGs interface location update procedure initiated by the MME, if the paging timer started in 203 does not expire, the MSC/VLR re-sends the SGs paging request message to the MME. In this case, because the UE already restores registration in the CS domain of the restarted MSC/VLR, the re-sent SGs paging request message includes the location information LAI of the UE.

210a: If the MME receives the SGs paging request message that is sent by the MSC/VLR and that includes the LAI before the timer started in 208a expires, the MME stops the timer, clears the SGs paging request message that is buffered in 204a and that does not include the LAI, and performs 210b. 210b: The MME initiates a CS service notification (CS Service Notification) message to the UE by using the existing underlying link, so as to continue a current downlink CSFB procedure.

### Alternatively,

210c: When the timer started in 208a expires, the MME performs 210d according to the SGs paging request message that is buffered in 204a and that does not include the LAI, and clears the buffered SGs paging request message. 210d: The MME directly initiates a CS service notification (CS Service Notification) message to the UE by using the existing underlying link, so as to restore the downlink CSFB procedure suspended in 204a.

It should be noted that two steps 210a and 210b and two steps 210c and 210d are mutually exclusive. If the MME performs 210a and 210b, the MME does not perform 210c or 210d, and vice versa.

Therefore, in the method for processing a downlink circuit switched CS service of this embodiment of the present invention, after an MME receives a notification message that is sent after an MSC/VLR is restarted and that is for a downlink CS service of UE, and when the UE is in an idle state, by suspending a CS fallback procedure triggered by the downlink CS service, the MME enables the UE to preferentially complete registration in a CS domain, and then instructs the UE to perform the CS fallback procedure triggered by the downlink CS service, so that procedure collision processing of the UE and a network side can be avoided.

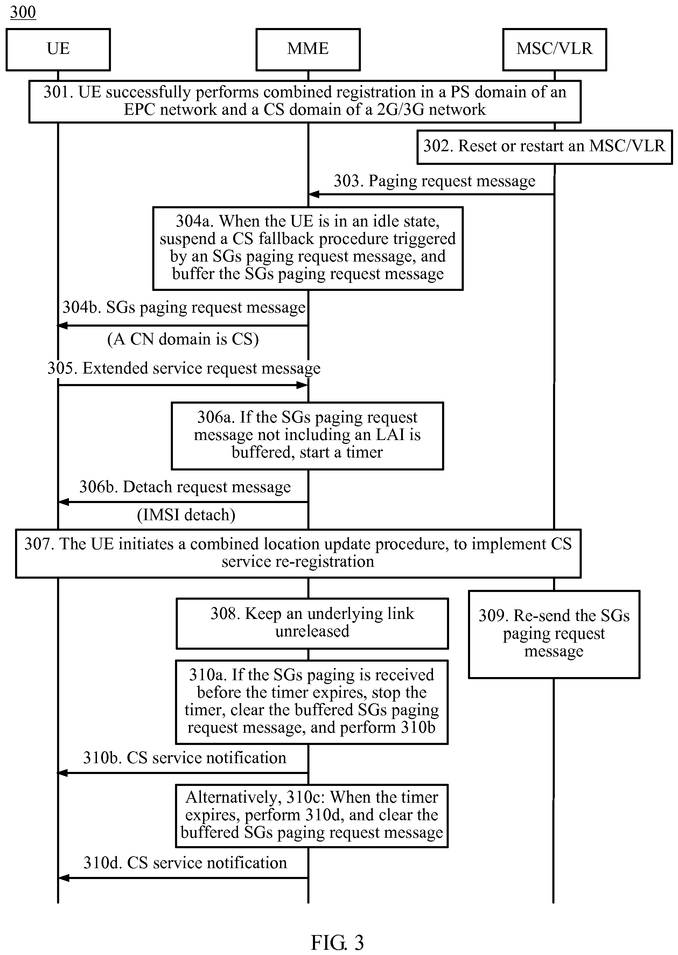

FIG. 3 shows a method 300 for processing a downlink CS service according to another embodiment of the present invention. The method 300 is an example of the method 100. As shown in FIG. 3, the method 300 for processing a downlink CS service includes the following content.

301: UE initiates a combined attach procedure or a combined location update procedure, and successfully performs combined registration in a PS domain of an EPC network and a CS domain of a 2G/3G network.

302: Reset or restart an MSC/VLR with which the UE is registered.

303: If the MSC/VLR receives, after being restarted, a downlink CS service request of the UE, the MSC/VLR sends an SGs paging request message to each MME that has an SGs interface between each MME and the MSC/VLR, and starts a paging timer for each MME, where the SGs paging message includes an identity IMSI of the UE, but does not include a location information identity LAI of the UE. It should be noted that after the MSC/VLR is restarted, the MSC/VLR sends a reset indication message to each MME that has an SGs interface connection to the MSC/VLR. After receiving the reset indication message, the MME marks that the MSC/VLR is unreliable.

304a: After the MME with which the UE is registered receives the SGs paging request message not including the LAI, when the UE is in an idle state, the MME suspends a CS fallback procedure triggered by the SGs paging request message, and buffers the SGs paging request message.

304b: Initiate air interface paging to the UE, and the MME sets a CN domain of the paging message to "CS".

305: The UE initiates an extended service request (Extended Service Request) procedure to the MME as a paging response, where the extended service request procedure enables the UE to change from the idle state into a connected state, and when the UE changes from the idle state into the connected state, it indicates that an underlying link is already established between the UE and the MME.

306a: If the MME buffers the SGs paging request message not including the LAI, the MME starts a timer.

306b: After the UE enters the connected state, the MME initiates a detach procedure whose detach type is "IMSI detach" to the UE, so as to trigger the UE to initiate a CS service restoration procedure.

It should be understood that duration of the timer ensures that the entire subsequent combined location update procedure can be completed. It should be further understood that the MME may simultaneously perform 306a and 306b, or may first perform 306a and then perform 306b, or may first perform 306b and then perform 306a.

307: The UE initiates the combined location update procedure, that is, sends a combined location update request message whose update type is "combined TA/LA update with IMSI attach" to the MME. The MME performs and completes the combined location update procedure according to the prior art, so as to implement re-registration of the UE in the CS domain. It should be understood that in this embodiment of the present invention, the combined location update procedure may be specifically a TAU procedure. It should be further understood that in this embodiment of the present invention, after receiving an IMSI detach request message, the UE may reply to the MME with a detach accept message. After receiving the detach accept message, the MME keeps the underlying link unreleased, that is, keeps the UE in the connected state, to ensure that the combined location update procedure is successfully performed.

308: The MME keeps the underlying link unreleased, that is, keeps the UE and the MME in the connected state.

309: After the MSC/VLR completes the registration of the UE to the CS domain, that is, completes an SGs interface location update procedure initiated by the MME, if the paging timer started in 303 does not expire, the MSC/VLR re-sends the SGs paging request message to the MME. In this case, because the UE already restores registration in the CS domain of the restarted MSC/VLR, the re-sent SGs paging request message includes the location information LAI of the UE.

310a: If the MME receives the SGs paging request message that is sent by the MSC/VLR and that includes the LAI before the timer started in 306a expires, the MME stops the timer, clears the SGs paging request message that is buffered in 304a and that does not include the LAI, and performs 310b. 310b: The MME initiates a CS service notification message to the UE by using the existing underlying link, so as to continue a current downlink CSFB procedure.

### Alternatively,

310c: When the timer started in 306a expires, perform 310d according to the SGs paging request message that is buffered in 304a and that does not include the LAI, and clear the buffered SGs paging request message. 310d: The MME directly initiates the CS service notification message to the UE by using the existing underlying link, so as to restore the downlink CSFB procedure suspended in 304a.

It should be noted that two steps 310a and 310b and two steps 310c and 310d are mutually exclusive. If the MME performs 310a and 310b, the MME does not perform 310c or 310d, and vice versa.

Therefore, in the method for processing a downlink circuit switched CS service of this embodiment of the present invention, after an MME receives a notification message that is sent after an MSC/VLR is restarted and that is for a downlink CS service of UE, and when the UE is in an idle state, by suspending a CS fallback procedure triggered by the downlink CS service, the MME enables the UE to preferentially complete registration in a CS domain, and then instructs the UE to perform the CS fallback procedure triggered by the downlink CS service, so that procedure collision processing of the UE and a network side can be avoided.

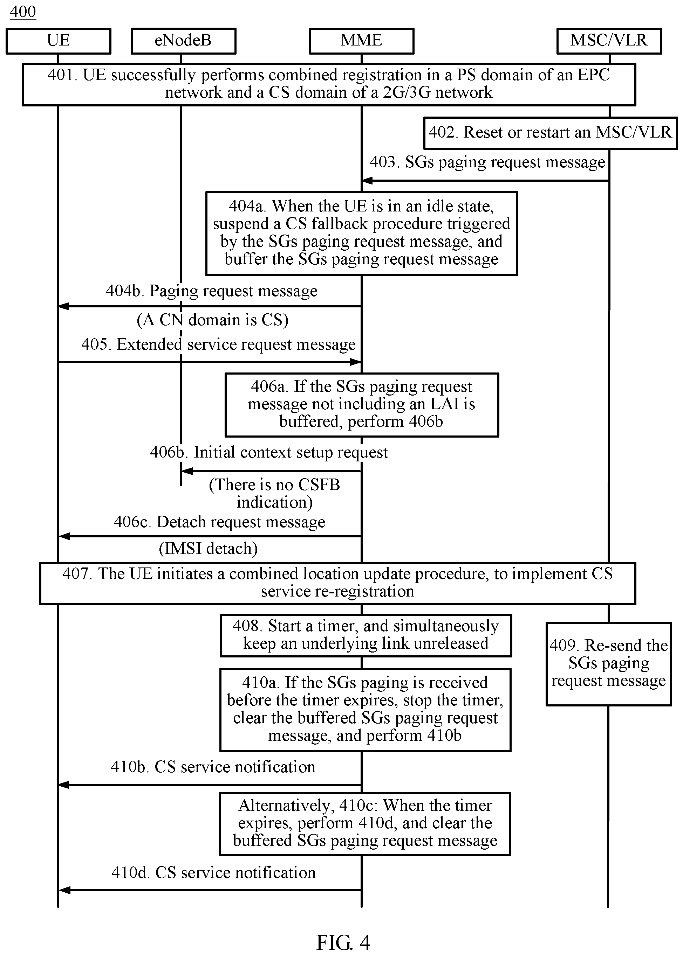

FIG. 4 shows a method 400 for processing a downlink CS service according to another embodiment of the present invention. The method 400 is an example of the method 100. As shown in FIG. 4, the method 400 for processing a downlink CS service includes the following content.

401: UE initiates a combined attach procedure or a combined location update procedure, and successfully performs combined registration in a PS domain of an EPC network and a CS domain of a 2G/3G network.

402: Reset an MSC/VLR with which the UE is registered.

403: If the MSC/VLR receives, after being restarted, a downlink CS voice service request of the UE, the MSC/VLR sends an SGs paging request message to each MME that has an SGs interface between each MME and the MSC/VLR, and starts a paging timer for each MME, where the SGs paging message includes an identity IMSI of the UE, but does not include a location information identity LAI of the UE. It should be noted that after the MSC/VLR is restarted, the MSC/VLR sends a reset indication message to each MME that has an SGs interface connection to the MSC/VLR. After receiving the reset indication message, the MME marks that the MSC/VLR is unreliable.

404a: After the MME with which the UE is registered receives the SGs paging request message not including the LAI, when the UE is in an idle state, the MME suspends a CS fallback procedure triggered by the SGs paging request message, and buffers the SGs paging request message.

404b: The MME initiates air interface paging to the UE, and the MME sets a CN domain of the paging message to "CS".

405: The UE initiates an extended service request procedure to the MME as a paging response, where the extended service request procedure enables the UE to change from the idle state into a connected state, and when the UE changes from the idle state into the connected state, it indicates that an underlying link is already established between the UE and the MME.

406a: After receiving an extended service request message, the MME performs the extended service request procedure as usual, and if the MME buffers the SGs paging request message not including the LAI, perform 406b.

406b: The MME sends an initial context setup (Initial Context Setup) request message to an eNodeB, where the initial context setup request message does not include CSFB indication information, and it should be noted that the MME does not send the CSFB indication information to the eNodeB in 406b, which is equivalent to that the MME converts the current extended service request procedure into a normal service request procedure, and performs the normal service request procedure.

406c: The MME initiates a detach procedure whose detach type is "IMSI detach" to the UE, so as to trigger the UE to initiate a CS service restoration procedure.

It should be understood that the MME may simultaneously perform 406b and 406c, or may first perform 406b and then perform 406c, or may first perform 406c and then perform 406b.

407: The UE initiates the combined location update procedure, that is, sends a combined location update request message whose update type is "combined TA/LA update with IMSI attach" to the MME. The MME performs and completes the combined location update procedure according to the prior art, so as to implement re-registration of the UE in the CS domain. It should be understood that in this embodiment of the present invention, the combined location update procedure may be specifically a TAU procedure. It should be further understood that in this embodiment of the present invention, after receiving an IMSI detach request message, the UE may reply to the MME with a detach accept message. After receiving the detach accept message, the MME keeps the underlying link unreleased, that is, keeps the UE in the connected state, to ensure that the combined location update procedure is successfully performed.

408: The MME starts a timer, and simultaneously keeps the underlying link unreleased, that is, keeps the UE and the MME in the connected state.

409: After the MSC/VLR completes the registration of the UE to the CS domain, that is, completes an SGs interface location update procedure initiated by the MME, if the paging timer started in 403 does not expire, the MSC/VLR re-sends the SGs paging request message to the MME. In this case, because the UE already restores registration in the CS domain of the restarted MSC/VLR, the re-sent SGs paging request message includes the location information LAI of the UE.

410a: If the MME receives the SGs paging request message that is sent by the MSC/VLR and that includes the LAI before the timer started in 408 expires, the MME stops the timer, clears the SGs paging request message that is buffered in 404a and that does not include the LAI, and performs 410b. 410b: The MME initiates a CS service notification message to the UE by using the existing underlying link, so as to continue a current downlink CSFB procedure.

### Alternatively,

410c: When the timer started in 408 expires, the MME performs 410d according to the SGs paging request message that is buffered in 404a and that does not include the LAI, and clears the buffered SGs paging request message. 410d: The MME directly initiates the CS service notification message to the UE by using the existing underlying link, so as to restore the downlink CSFB procedure suspended in 404a.

It should be noted that two steps 410a and 410b and two steps 410c and 410d are mutually exclusive. If the MME performs 410a and 410b, the MME does not perform 410c or 410d, and vice versa.

It should be noted that the examples shown in FIG. 2 to FIG. 4 are intended to help a person skilled in the art better understand the embodiments of the present invention, but not intended to limit the scope of the embodiments of the present invention. Apparently, a person skilled in the art may make various equivalent modifications or changes according to the examples provided in FIG. 2 and FIG. 4, and such modifications or changes also fall within the scope of the embodiments of the present invention.

It should be understood that sequence numbers of the foregoing processes do not mean execution sequences. The execution sequences of the processes should be determined according to functions and internal logic of the processes, and should not be construed as any limitation on the implementation processes of this embodiment of the present invention.

Therefore, in the method for processing a downlink circuit switched CS service of this embodiment of the present invention, after an MME receives a notification message that is sent after an MSC/VLR is restarted and that is for a downlink CS service of UE, and when the UE is in an idle state, by suspending a CS fallback procedure triggered by the downlink CS service, the MME enables the UE to preferentially complete registration in a CS domain, and then instructs the UE to perform the CS fallback procedure triggered by the downlink CS service, so that procedure collision processing of the UE and a network side can be avoided.

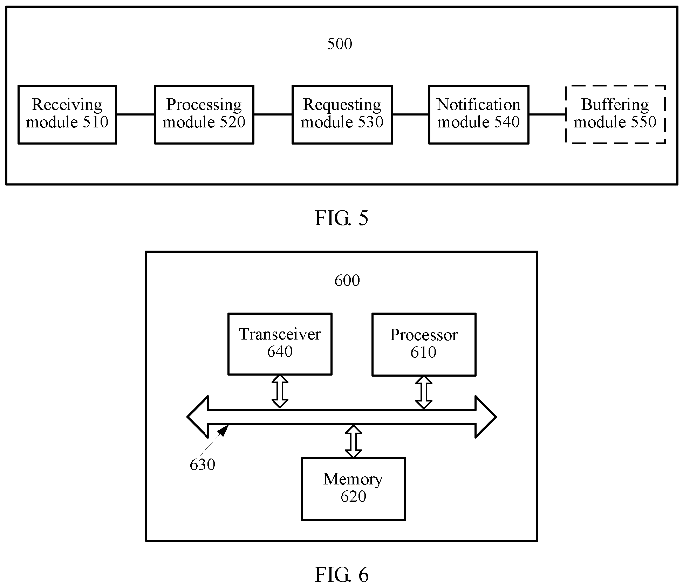

The foregoing describes the methods for processing a downlink circuit switched service according to the embodiments of the present invention in detail with reference to FIG. 1 to FIG. 4, and the following describes mobility management entities according to embodiments of the present invention in detail with reference to FIG. 5 and FIG. 6.

FIG. 5 is a schematic block diagram of a mobility management entity MME 500 according to an embodiment of the present invention. As shown in FIG. 5, the mobility management entity MME 500 includes: a receiving module 510, a processing module 520, a requesting module 530, and a notification module 540.

The receiving module 510 is configured to receive a notification message sent by a mobile switching center/visitor location register MSC/VLR after the MSC/VLR is restarted, where the notification message is used to indicate a downlink circuit switched CS service to the MME for user equipment UE.

The processing module 520 is configured to: when the UE is in an idle state, suspend a CS fallback procedure triggered by the downlink CS service.

The requesting module 530 is configured to request the UE to enter a connected state, and is further configured to request the UE to initiate a combined location update procedure, so that the UE completes registration in a CS domain.

The notification module 540 is configured to instruct, after the UE completes the registration in the CS domain, the UE to perform the CS fallback procedure triggered by the downlink CS service.

Therefore, after the mobility management entity of this embodiment of the present invention receives the notification message that is sent after the MSC/VLR is restarted and that is for the downlink CS service of the UE, and when the UE is in an idle state, by suspending the CS fallback procedure triggered by the downlink CS service, the mobility management entity enables the UE to preferentially complete registration in the CS domain, and then instructs the UE to perform the CS fallback procedure triggered by the downlink CS service, so that procedure collision processing of the UE and a network side can be avoided.

Specifically, the notification message received by the receiving module 510 is a first paging request message; and the MME 500 further includes: a buffering module 550, configured to buffer the first paging request message, where the suspending module 520 is configured to suspend a CS fallback procedure triggered by the first paging request message.

Specifically, in another embodiment, the requesting module 530 is configured to send an air interface paging message to the UE, where a core network CN domain included in the air interface paging message is the CS domain; and the receiving module 510 is further configured to receive an extended service request message that is sent by the UE according to the air interface paging message.

Optionally, in another embodiment, the MME 500 further includes: a first timing module, configured to: after the receiving module 510 receives the extended service request message sent by the UE, start a first timer, where

the notification module 540 is configured to: after the UE completes the registration in the CS domain, before the first timer expires, and when a second paging request message sent by the MSC/VLR is received, instruct the UE to perform a CS fallback procedure triggered by the second paging request message, where the second paging request message is used to indicate the downlink CS service to the MME for the UE, and the second paging request message includes an international mobile subscriber identity IMSI and a location area identity LAI of the UE; or

the notification module 540 is configured to: after the UE completes the registration in the CS domain, and when the first timer expires, instruct the UE to perform the CS fallback procedure that is suspended by the processing module 520 and that is triggered by the first paging request message.

Specifically, after the UE completes the registration in the CS domain, and before the first timer expires, if the receiving module 510 receives the second paging request message sent by the MSC/VLR, the processing module 520 instructs the UE to perform the CS fallback procedure triggered by the second paging request message. In addition, the processing module 520 may further stop the first timer started by the first timing module, delete the first paging request message buffered in the buffering module 550, and terminate the suspended CS fallback procedure triggered by the first paging request message.

After the UE completes the registration in the CS domain, and when the first timer expires, if the receiving module 510 does not receive the second paging request message sent by the MSC/VLR, the processing module 520 instructs the UE to perform the CS fallback procedure that is suspended by the processing module 520 and that is triggered by the first paging request message. Subsequently, the processing module 520 may further delete the first paging request message buffered in the buffering module 550.

Specifically, in another embodiment, the requesting module 530 is further configured to: after the receiving module 510 receives the extended service request message sent by the UE, send an initial context setup request message to an evolved NodeB eNodeB, where the initial context setup request message does not include CSFB indication information.

Alternatively, in another embodiment, the requesting module 530 is configured to send an air interface paging message to the UE, where a CN domain included in the air interface paging message is a PS domain; and the receiving module 510 is further configured to receive a service request message that is sent by the UE according to the air interface paging message.

Specifically, in this embodiment of the present invention, the mobility management entity 500 may further include: a second timing module, configured to: after the UE completes the registration in the CS domain, start a second timer, where

the notification module 540 is configured to: after the UE completes the registration in the CS domain, before the second timer expires, and when the second paging request message sent by the MSC/VLR is received, instruct the UE to perform the CS fallback procedure triggered by the second paging request message, where the second paging request message is used to indicate the downlink CS service to the MME for the UE, and the second paging request message includes the IMSI and the LAI of the UE; or

the notification module 540 is configured to: after the UE completes the registration in the CS domain, and when the second timer expires, instruct the UE to perform the CS fallback procedure that is suspended by the processing module 520 and that is triggered by the first paging request message.

Specifically, after the UE completes the registration in the CS domain, and before the second timer expires, if the receiving module 510 receives the second paging request message sent by the MSC/VLR, the notification module 540 instructs the UE to perform the CS fallback procedure triggered by the second paging request message. In addition, the processing module 520 is further configured to: stop the second timer started by the second timing module, delete the first paging request message buffered in the buffering module 550.

After the UE completes the registration in the CS domain, and when the second timer expires, if the receiving module 510 does not receive the second paging request message sent by the MSC/VLR, the notification module 540 instructs the UE to perform the CS fallback procedure that is suspended by the processing module 520 and that is triggered by the first paging request message. Subsequently, the processing module 520 may further delete the first paging request message buffered in the buffering module 550.

Specifically, in another embodiment, the requesting module 530 is configured to send a detach request message to the UE, where the detach request message is used to request the UE to initiate the combined location update procedure, and the detach type included in the detach request message is IMSI detach.

Specifically, in another embodiment, the notification module 540 is configured to send a CS service notification message to the UE, so that the UE performs the CS fallback procedure triggered by the downlink CS service.

It should be understood that, the mobility management entity 500 according to this embodiment of the present invention may correspond to the mobility management entity in the method 100 for processing a downlink CS service according to the embodiment of the present invention, and the foregoing and other operations and/or functions of modules in the mobility management entity 500 are separately used to implement corresponding procedures of the method 100 shown in FIG. 1. For brevity, details are not described herein again.

Therefore, after the mobility management entity of this embodiment of the present invention receives the notification message that is sent after the MSC/VLR is restarted and that is for the downlink CS service of the UE, and when the UE is in an idle state, by suspending the CS fallback procedure triggered by the downlink CS service, the mobility management entity enables the UE to preferentially complete registration in the CS domain, and then instructs the UE to perform the CS fallback procedure triggered by the downlink CS service, so that procedure collision processing of the UE and a network side can be avoided.

FIG. 6 is a schematic block diagram of a mobility management entity 600 according to an embodiment of the present invention. The mobility management entity 600 includes: a processor 610, a memory 620, a bus system 630, and a transceiver 640. The processor 610, the memory 620, and the transceiver 640 are connected by using the bus system 630, the memory 620 is configured to store an instruction, and the processor 610 is configured to execute the instruction stored in the memory 620.

The transceiver 640 is configured to receive a notification message sent by after the MSC/VLR is restarted, where the notification message is used to indicate a downlink circuit switched CS service to the MME for user equipment UE. The processor 610 is configured to: when the UE is in an idle state, suspend a CS fallback procedure triggered by the downlink CS service. The transceiver 640 is further configured to: request the UE to enter a connected state, and request the UE to initiate a combined location update procedure, so that the UE completes registration in a CS domain. The transceiver 640 is further configured to instruct, after the UE completes the registration in the CS domain, the UE to perform the CS fallback procedure triggered by the downlink CS service.

Therefore, after the mobility management entity of this embodiment of the present invention receives the notification message that is sent after the MSC/VLR is restarted and that is for the downlink CS service of the UE, and when the UE is in an idle state, by suspending the CS fallback procedure triggered by the downlink CS service, the mobility management entity enables the UE to preferentially complete registration in the CS domain, and then instructs the UE to perform the CS fallback procedure triggered by the downlink CS service, so that procedure collision processing of the UE and a network side can be avoided.

It should be understood that in this embodiment of the present invention, the processor 610 may be a central processing unit (Central Processing Unit, CPU), or the processor 610 may be another general purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor or the processor may be any conventional processor and the like.

The memory 620 may include a read-only memory and a random access memory, and provides an instruction and data to the processor 610. A part of the memory 620 may further include a non-volatile random access memory. For example, the memory 620 may further store device type information.

The bus system 630 may include a power bus, a control bus, a status signal bus, and the like in addition to a data bus. However, for clear description, various types of buses in the figure are marked as the bus system 630.

In an implementation process, steps of the foregoing methods may be accomplished by using an integrated logic circuit of hardware in the processor 610 or an instruction in a form of software. Steps of the methods disclosed with reference to the embodiments of the present invention may be directly performed and completed by means of a hardware processor, or may be performed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 620, and the processor 610 reads information in the memory 620 and completes the steps in the foregoing methods in combination with hardware of the processor 610. To avoid repetition, details are not described herein again.

Specifically, in another embodiment, the notification message received by the transceiver 640 is a first paging request message. The memory 620 is further configured to buffer the first paging request message. Correspondingly, the processor 610 is configured to suspend a CS fallback procedure triggered by the first paging request message.

Specifically, in another embodiment, the transceiver 640 is configured to: send an air interface paging message to the UE, where a core network CN domain included in the air interface paging message is the CS domain; and receive an extended service request message that is sent by the UE according to the air interface paging message.

Optionally, in another embodiment, the processor 610 is further configured to: after the transceiver 640 receives the extended service request message sent by the UE, start a first timer. The transceiver 640 is configured to: after the UE completes the registration in the CS domain, before the first timer expires, and when a second paging request message sent by the MSC/VLR is received, instruct the UE to perform a CS fallback procedure triggered by the second paging request message, where the second paging request message is used to indicate the downlink CS service to the MME for the UE, and the second paging request message includes an IMSI and an LAI of the UE; or

the transceiver 640 instructs, after the UE completes the registration in the CS domain, and when the first timer expires, the UE to perform the CS fallback procedure that is suspended by the processor 610 and that is triggered by the first paging request message.

Specifically, after the UE completes the registration in the CS domain, and before the first timer expires, if the transceiver 640 receives the second paging request message sent by the MSC/VLR, the transceiver 640 instructs the UE to perform the CS fallback procedure triggered by the second paging request message. In addition, the processor 610 may further stop the first timer, delete the first paging request message buffered in the memory 620, and terminate the suspended CS fallback procedure triggered by the first paging request message.

After the UE completes the registration in the CS domain, and when the first timer expires, if the transceiver 640 does not receive the second paging request message sent by the MSC/VLR, the transceiver 640 instructs the UE to perform the CS fallback procedure that is suspended by the processor 610 and that is triggered by the first paging request message. In addition, the processor 610 may further delete the first paging request message buffered in the memory 620.

Specifically, in another embodiment, the transceiver 640 is further configured to: after the extended service request message sent by the UE is received, send an initial context setup request message to an evolved NodeB eNodeB, where the initial context setup request message does not include CSFB indication information.

Alternatively, in another embodiment, the transceiver 640 is configured to: send an air interface paging message to the UE, where the CN domain included in the air interface paging message is a PS domain; and receive a service request message that is sent by the UE according to the air interface paging message.

Optionally, in another embodiment, the processor 610 is further configured to: after the UE completes the registration in the CS domain, start a second timer. The transceiver 640 is configured to: after the UE completes the registration in the CS domain, before the second timer expires, and when the second paging request message sent by the MSC/VLR is received, instruct the UE to perform the CS fallback procedure triggered by the second paging request message, where the second paging request message is used to indicate the downlink CS service to the MME for the UE, and the second paging request message includes the IMSI and the LAI of the UE; or

the transceiver 640 is configured to: when the second timer expires, instruct the UE to perform the CS fallback procedure that is suspended by the processor 610 and that is triggered by the first paging request message.

Specifically, after the UE completes the registration in the CS domain, and before the second timer expires, if the transceiver 640 receives the second paging request message sent by the MSC/VLR, the transceiver 640 instructs the UE to perform the CS fallback procedure triggered by the second paging request message. In addition, the processor 610 may further stop the second timer, and delete the first paging request message buffered in the memory 620.

After the UE completes the registration in the CS domain, and before the second timer expires, if the transceiver 640 does not receive the second paging request message sent by the MSC/VLR, the transceiver 640 instructs the UE to perform the CS fallback procedure that is suspended by the processor 610 and that is triggered by the first paging request message. In addition, the processor 610 may further delete the first paging request message buffered in the memory 620.

Specifically, in another embodiment, the transceiver 640 is configured to send a detach request message to the UE, where the detach request message is used to request the UE to initiate the combined location update procedure, and a detach type included in the detach request message is IMSI detach.

Specifically, in another embodiment, the transceiver 640 is configured to send a CS service notification message to the UE, so that the UE performs the CS fallback procedure triggered by the downlink CS service.

It should be understood that, the mobility management entity 600 according to this embodiment of the present invention may correspond to the mobility management entity in the method 100 for processing a downlink CS service according to the embodiment of the present invention, and the foregoing and other operations and/or functions of modules in the mobility management entity 600 are separately used to implement corresponding procedures of the method 100 shown in FIG. 1. For brevity, details are not described herein again.

Therefore, after the mobility management entity of this embodiment of the present invention receives the notification message that is sent after the MSC/VLR is restarted and that is for the downlink CS service of the UE, and when the UE is in an idle state, by suspending the CS fallback procedure triggered by the downlink CS service, the mobility management entity enables the UE to preferentially complete registration in the CS domain, and then instructs the UE to perform the CS fallback procedure triggered by the downlink CS service, so that procedure collision processing of the UE and a network side can be avoided.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for processing a downlink circuit switched CS service, comprising:
receiving, by a mobility management entity MME, a notification message sent by a mobile switching center/visitor location register MSC/VLR after the MSC/VLR is restarted, wherein the notification message is used to indicate a downlink circuit switched CS service to the MME for user equipment UE;
when the UE is in an idle state, suspending, by the MME, a CS fallback procedure triggered by the downlink CS service;
requesting, by the MME, the UE to enter a connected state;
requesting, by the MME, the UE to initiate a combined location update procedure, so that the UE completes registration in a CS domain; and
instructing, by the MME after the UE completes the registration in the CS domain, the UE to perform the CS fallback procedure triggered by the downlink CS service.

2. The method according to claim 1, wherein the notification message is a first paging request message; and
the method further comprises:
buffering, by the MME, the first paging request message, wherein
the suspending a CS fallback procedure triggered by the downlink CS service comprises:
suspending a CS fallback procedure triggered by the first paging request message.

3. The method according to claim 2, wherein the requesting, by the MME, the UE to enter a connected state comprises:
sending, by the MME, an air interface paging message to the UE, wherein a core network CN domain comprised in the air interface paging message is the CS domain; and
the method further comprises:
receiving, by the MME, an extended service request message that is sent by the UE according to the air interface paging message.

4. The method according to claim 3, wherein after the receiving, by the MME, an extended service request message that is sent by the UE, the method further comprises:
starting, by the MME, a first timer, wherein
the instructing, by the MME after the UE completes the registration in the CS domain, the UE to perform the CS fallback procedure triggered by the downlink CS service comprises:
after the UE completes the registration in the CS domain, before the first timer expires, and when the MME receives a second paging request message sent by the MSC/VLR, instructing, by the MME, the UE to perform a CS fallback procedure triggered by the second paging request message, wherein the second paging request message is used to indicate the downlink CS service to the MME for the UE, and the second paging request message comprises an international mobile subscriber identity IMSI and a location area identity LAI of the UE;
or
after the UE completes the registration in the CS domain, and when the first timer expires, instructing, by the MME, the UE to perform the suspended CS fallback procedure triggered by the first paging request message.

5. The method according to claim 3, wherein after the receiving, by the MME, an extended service request message that is sent by the UE, the method further comprises:
sending, by the MME, an initial context setup request message to an evolved NodeB eNodeB, wherein the initial context setup request message does not comprise circuit switched fallback CSFB indication information.

6. The method according to claim 2, wherein the requesting, by the MME, the UE to enter a connected state comprises:
sending, by the MME, an air interface paging message to the UE, wherein a CN domain comprised in the air interface paging message is a packet switched PS domain; and
the method further comprises:
receiving, by the MME, a service request message that is sent by the UE according to the air interface paging message.

7. The method according to claim 5 or 6, wherein after the UE completes re-registration in the CS domain, the method further comprises:
starting, by the MME, a second timer, wherein
the instructing, by the MME after the UE completes the registration in the CS domain, the UE to perform the CS fallback procedure triggered by the downlink CS service comprises:
after the UE completes the registration in the CS domain, before the second timer expires, and when the MME receives a second paging request message sent by the MSC/VLR, instructing, by the MME, the UE to perform a CS fallback procedure triggered by the second paging request message, wherein the second paging request message is used to indicate the downlink CS service to the MME for the UE, and the second paging request message comprises an IMSI and an LAI of the UE;
or
after the UE completes the registration in the CS domain, and when the second timer expires, instructing, by the MME, the UE to perform the suspended CS fallback procedure triggered by the first paging request message.

8. The method according to any one of claims 1 to 7, wherein the requesting, by the MME, the UE to initiate a combined location update procedure comprises:
sending, by the MME, a detach request message to the UE, wherein the detach request message is used to request the UE to initiate the combined location update procedure, and a detach type comprised in the detach request message is IMSI detach.

9. The method according to any one of claims 1 to 8, wherein the instructing, by the MME, the UE to perform the CS fallback procedure triggered by the downlink CS service comprises:
sending, by the MME, a CS service notification message to the UE, so that the UE performs the CS fallback procedure triggered by the downlink CS service.

10. A mobility management entity MME, comprising:
a receiving module, configured to receive a notification message sent by a mobile switching center/visitor location register MSC/VLR after the MSC/VLR is restarted, wherein the notification message is used to indicate a downlink circuit switched CS service to the MME for user equipment UE;
a processing module, configured to: when the UE is in an idle state, suspend a CS fallback procedure triggered by the downlink CS service;
a requesting module, configured to request the UE to enter a connected state, wherein
the requesting module is further configured to request the UE to initiate a combined location update procedure, so that the UE completes registration in a CS domain; and
a notification module, configured to instruct, after the UE completes the registration in the CS domain, the UE to perform the CS fallback procedure triggered by the downlink CS service.

11. The MME according to claim 10, wherein the notification message received by the receiving module is a first paging request message; and
the MME further comprises:
a buffering module, configured to buffer the first paging request message, wherein
the processing module is configured to suspend a CS fallback procedure triggered by the first paging request message.

12. The MME according to claim 11, wherein
the requesting module is configured to send an air interface paging message to the UE, wherein a core network CN domain comprised in the air interface paging message is the CS domain; and
the receiving module is further configured to receive an extended service request message that is sent by the UE according to the air interface paging message.

13. The MME according to claim 12, further comprising:
a first timing module, configured to: after the receiving module receives the extended service request message sent by the UE, start a first timer, wherein
the notification module is configured to: after the UE completes the registration in the CS domain, before the first timer expires, and when the receiving module receives a second paging request message sent by the MSC/VLR, instruct the UE to perform a CS fallback procedure triggered by the second paging request message, wherein the second paging request message is used to indicate the downlink CS service to the MME for the UE, and the second paging request message comprises an international mobile subscriber identity IMSI and a location area identity LAI of the UE;
or
the notification module is configured to: after the UE completes the registration in the CS domain, and when the first timer expires, instruct the UE to perform the CS fallback procedure that is suspended by the processing module and that is triggered by the first paging request message.

14. The MME according to claim 12, wherein the requesting module is further configured to:
after the receiving module receives the extended service request message sent by the UE, send an initial context setup request message to an evolved NodeB eNodeB, wherein the initial context setup request message does not comprise circuit switched fallback CSFB indication information.

15. The MME according to claim 11, wherein
the requesting module is configured to send an air interface paging message to the UE, wherein the CN domain comprised in the air interface paging message is a packet switched PS domain; and
the receiving module is further configured to receive a service request message that is sent by the UE according to the air interface paging message.

16. The MME according to claim 14 to 15, further comprising:
a second timing module, configured to: after the UE completes the registration in the CS domain, start a second timer, wherein
the notification module is configured to: after the UE completes the registration in the CS domain, before the second timer expires, and when the receiving module receives a second paging request message sent by the MSC/VLR, instruct the UE to perform a CS fallback procedure triggered by the second paging request message, wherein the second paging request message is used to indicate the downlink CS service to the MME for the UE, and the second paging request message comprises an IMSI and an LAI of the UE;
or
the notification module is configured to: after the UE completes the registration in the CS domain, and when the second timer expires, instruct the UE to perform the CS fallback procedure that is suspended by the processing module and that is triggered by the first paging request message.

17. The MME according to any one of claims 10 to 16, wherein the requesting module is configured to send a detach request message to the UE, wherein the detach request message is used to request the UE to initiate the combined location update procedure, and a detach type comprised in the detach request message is IMSI detach.

18. The MME according to any one of claims 10 to 17, wherein the notification module is configured to send a CS service notification message to the UE, so that the UE performs the CS fallback procedure triggered by the downlink CS service.
